(19) Europäisches Patentamt
European Patent Office
Office européen des brevets

(11) **EP 2 350 210 B1**

(12) **EUROPÄISCHE PATENTSCHRIFT**

(45) Veröffentlichungstag und Bekanntmachung des Hinweises auf die Patenterteilung:
**07.01.2015 Patentblatt 2015/02**

(21) Anmeldenummer: **09763908.2**

(22) Anmeldetag: **19.11.2009**

(51) Int Cl.:
***C09C 1/56*** (2006.01)

(86) Internationale Anmeldenummer:
**PCT/EP2009/065500**

(87) Internationale Veröffentlichungsnummer:
**WO 2010/060858 (03.06.2010 Gazette 2010/22)**

(54) **PIGMENTGRANULAT, VERFAHREN ZU DESSEN HERSTELLUNG UND VERWENDUNG**

PIGMENT GRANULATE, METHOD FOR PRODUCING THE SAME AND USE THEREOF

GRANULES PIGMENTAIRES, PROCÉDÉ DE PRODUCTION ASSOCIÉ ET LEUR UTILISATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **27.11.2008 DE 102008044116**

(43) Veröffentlichungstag der Anmeldung:
**03.08.2011 Patentblatt 2011/31**

(73) Patentinhaber: **Orion Engineered Carbons GmbH**
**60528 Frankfurt am Main (DE)**

(72) Erfinder:
• **GÖTZ, Christian**
**63500 Seligenstadt (DE)**
• **TAUBER, Gerd**
**63500 Seligenstadt (DE)**
• **MCINTOSH, Ralph**
**63457 Hanau (DE)**

• **KALBITZ, Werner**
**63517 Rodenbach (DE)**
• **STENGER, Frank**
**63755 Alzenau (DE)**
• **MERTSCH, Rüdiger**
**65189 Wiesbaden (DE)**
• **MÜHLBACH, Mandy**
**63500 Sellgenstadt (DE)**

(74) Vertreter: **f & e patent**
**Fleischer, Engels & Partner mbB, Patentanwälte**
**Braunsberger Feld 29**
**51429 Bergisch Gladbach (DE)**

(56) Entgegenhaltungen:
EP-A2- 2 155 824     WO-A1-99/58617
WO-A1-03/064540     WO-A1-2005/017047
WO-A2-2007/039604     DE-A1- 19 748 575
DE-A1- 19 934 282

**Beschreibung**

Die Erfindung betrifft ein Pigmentgranulat, ein Verfahren zu dessen Herstellung und dessen Verwendung.

Pulverpigmente werden zum Einfärben von Thermoplasten und Duroplasten eingesetzt. Vorteil der Pulverpigmente ist, daß sie nicht von einem Trägermaterial abhängig sind. Dieser Vorteil wird jedoch oft auf Kosten der Dispergierbarkeit erzielt.

Zur Verbesserung der Dispergierbarkeit werden die Pigmente mit Harz (DE 2540355) oder mit Polymeren belegt (US 3133893).

Spezielle Trocknungsverfahren sind bekannt aus EP 0036520, wobei feinteilige Pigmente und eine Flüssigkeit, deren kritische Temperatur unterhalb der Zersetzungstemperatur des Pigments liegt, unter Druck auf Temperaturen oberhalb der kritischen Temperatur der Flüssigkeit erwärmt und dann entspannt wird, wobei die Temperatur stets oberhalb der Taulinie der Flüssigkeit gehalten wird.

Außerdem sind Pigmentpräparationen aus EP 0282855 bekannt, die ein organisches Pigment und/oder Ruß und ein Tensid aus der Reihe Alkylbenzolsulfonate oder spezielle Sulfobernsteinsäureester enthalten, und die, gegebenenfalls nach Naßzerkleinerung, durch Sprüh- oder Gefriertrocknung aus wäßrigem Medium getrocknet werden.

Aus EP 1103173 sind Pigmentpräparationen für die Einfärbung von Saatgut bekannt, enthaltend ein Pigment und ein Polyetherpolyol.

Aus EP 857764 sind anorganische Pigmentgranulate bekannt, die anorganische Pigmente und wasserlösliche, hydrophile oder hydrophob/hydrophile Hilfsmittel in Mengen von 0,1 bis 10 Gew.-%, bezogen auf Pigment, enthalten und eine durchschnittliche Teilchengröße von 50 bis 1500 $\mu$m aufweisen.

Ferner sind aus EP 1090081 wässrige Dispersionen bekannt, die ein Pigment und ein Dispergiermittel der Formel $[CH_3(CH_2)_n][CH_3(CH_2)_m]CH[(CH_2)_pO(AO)_qH]$ enthalten.

Desweiteren sind Pigmentpräparationen aus US 6063182 und DE 19731572 und Ink Jet Tinte aus US 5837044 bekannt.

Aus WO 2003055959 sind partikuläre Feststoffpärparationen bekannt, enthaltend einen partikulären Feststoff und 0,05 - 9 Gew.-% einer Verbindung, ausgewählt aus der Gruppe der Polyglykole oder Diole mit mindestens einer endständigen von Wasserstoff verschiedenen Gruppe, oder Alkylsulfonate.

Ferner sind aus US 2005090609 Pigmentgranulate bekannt mit einer mittleren Korngröße von 50-5000 $\mu$m und einer BET-Oberfläche von <= 15m$^2$/g, enthaltend unter anderem 10-40 Gew.-% mindestens eines nicht ionischen oberflächenaktiven Additivs auf der Basis von Polyethern.

Die bekannten Pigmentpräparationen haben den Nachteil, dass das Dispergierverhalten ohne Zusatz von Additiven in Wasser oder wasserbasierenden Lacksystemen schlecht ist.

Aus DE 102007026551 ist eine Pigmentpräparation bekannt, wobei diese mindestens ein Pigment und mindestens eine Verbindung der allgemeinen Formel $CH_3$-$(CH_2)_n$-$CH_2$-O-$[(CH_2)_p$-O$]_m$-H, mit n=8-18, p=1-4 und m=15-25, enthält.

Aufgabe der vorliegenden Erfindung ist es, ein Pigmentgranulat herzustellen, das ein gutes Dispergierverhalten in Wasser oder wasserbasierenden Lacksystemen bei gleichzeitig sehr guter Koloristik des Lacks aufweist und im vernetzten Lackfilm kein Aufschwimmen (Migration zur Oberfläche des Lackfilms) einer der Komponenten des Pigmentgranulates stattfindet.

Gegenstand der Erfindung ist ein Pigmentgranulat, welches dadurch gekennzeichnet ist, dass dieses 40-65 Gew.-%, bevorzugt 43-63 Gew.-%, besonders bevorzugt 45-60 Gew.-%, ganz besonders bevorzugt 45-56 Gew.-%, bezogen auf das Pigmentgranulat, Pigment, und mindestens 10 Gew.-%, bevorzugt mindestens 12 Gew.-%, besonders bevorzugt mindestens 15 Gew.-%, ganz besonders bevorzugt mindestens 20 Gew.-%, bezogen auf das Pigmentgranulat, einer Verbindung der allgemeinen Formel I

$$CH_3\text{-}(CH_2)_n\text{-}CH_2\text{-}O\text{-}[(CH_2)_p\text{-}O]_m\text{-}H \qquad I,$$

mit n=8-18, vorzugsweise n=10-18, besonders bevorzugt n=12-17, ganz besonders bevorzugt n=14-16, p=1-4, vorzugsweise p=2, und m=35-100, vorzugsweise m=35-90, besonders bevorzugt m=40-80, ganz besonders bevorzugt m=45-70, enthält, das Gewichtsverhältnis der Verbindung der allgemeinen Formel I zu Pigment größer gleich der STSA Oberfläche des Pigmentes in m$^2$/g multipliziert mit 0,0021 g/m$^2$ ist und die massengewichtete mittlere Korngröße des Pigmentgranulates <20 $\mu$m, vorzugsweise <15 $\mu$m, besonders bevorzugt <12 $\mu$m, ganz besonders bevorzugt <9 $\mu$m, beträgt.

Durch das Festlegen einer Untergrenze für das Gewichtsverhältnis der Verbindung der allgemeinen Formel I zu Pigment kann eine Mindestbelegung der Pigmentoberfläche (STSA Oberfläche) mit Verbindung der allgemeinen Formel I gewährleistet werden.

Die STSA Oberfläche des Pigmentes kann kleiner gleich 385 m$^2$/g, vorzugsweise kleiner gleich 380 m$^2$/g, betragen.

Die STSA Oberfläche wird für die Pigmente außer den Pigmentrußen bestimmt nach ASTM D 6556 (2004).

Für Pigmentruße wird die Probe abweichend von der ASTM D 6556 (2004) bei 105 °C getrocknet.

Die massengewichtete mittlere Korngröße der Pigmentgranulate wird in Anlehnung an ISO 13320-1 mittels Laserbeugungsspektroskopie bestimmt. Die Bestimmung erfolgt in einem Laserbeugungsspektrometer HELOS der Firma Sympatec. Die Dispergierung der Pigmentgranulate erfolgt bei einem Dispergierluftdruck von 1 bar. Die Auswertung der Partikelgrößenverteilung erfolgt nach der Fraunhofer Theorie.

Als Pigmente können Ruße, Carbonaerogele oder Buntpigmente eingesetzt werden.

Als Buntpigmente können beispielsweise Gelb-, Orange-, Rot-, Magenta-, Violett-, Blau-, Cyan-, Grün- oder Braunpigmente eingesetzt werden. Als Buntpigmente können anorganische Blaupigmente, beispielsweise Eisenblau, Ultramarinblau, Kobaltblau oder Mischphasenblaupigmente, oder organische Blaupigmente, beispielsweise Phthalocyaninblau oder Indanthrenblau, eingesetzt werden.

Als Ruß können Furnace-, Gas-, Flamm-, Acetylenruße, Sihaltige Ruße, bekannt aus WO 98/45361 oder DE 19613796, Inversionsruße, bekannt aus DE 19521565, und metallhaltige Ruße, bekannt aus WO 98/42778, verwendet werden. Als Ruß können bevorzugt Pigmentruße mit einem mittleren Primärteilchendurchmesser von 8 bis 80 nm, vorzugsweise 10 bis 35 nm, und einer OAN-Zahl von 40 bis 200 ml/100 g, vorzugsweise 60 bis 150 ml/100 g, eingesetzt werden.

Der Gasruß kann einen mittleren Primärteilchendurchmesser von 8 bis 30 nm, vorzugsweise 10 bis 25 nm, haben. Die Gasruße können einen pH-Wert von 2 bis 5, vorzugsweise 3,5 bis 4,5, haben.

Der Furnanceruß kann einen mittleren Primärteilchendurchmesser von 8 bis 80 nm, vorzugsweise 10-50 nm, und eine OAN-Zahl von 40 bis 200 ml/100 g, vorzugsweise 50 bis 180 ml/100 g, haben.

Die Bestimmung der Öl-Absorptionszahl (OAN) von Rußpigmenten erfolgt in Anlehnung an ASTM D 2414. Abweichend zu ASTM D 2414 (2000) wird das Rußpigment bei 105 °C bis zur Gewichtskonstanz getrocknet und die Ölzahl wird in ml / 100 g Rußpigment angegeben.

Die Bestimmung des pH Wertes eines Pigmentrußes erfolgt in Anlehnung an DIN ISO 787/9 (1995). Abweichend zu DIN ISO 787/9 (1995) wird entionisiertes Wasser verwendet (vor Gebrauch nicht ausgekocht), es wird mit einer 10%-igen Rußpigment-Konzentration gearbeitet, die Rußpigment - Suspension wird 1 Minute gerührt, zur Benetzung werden einheitlich immer 5 Tropfen Ethanol zugefügt und der pH-Wert wird nach konstanter Anzeige abgelesen.

Die mittlere Primärpartikelgröße wird bestimmt nach DIN 53206. Es handelt sich um eine Direktbestimmung der mittleren Primärpartikelgröße anhand von kalibrierten TEM-Aufnahmen mittels Teilchengrößenzählgerät TGZ3.

Die als Pigment eingesetzten Carbonaerogele können einen BET-Wert von 20-1500 $m^2$/g, vorzugsweise von 100-1200 $m^2$/g, besonders bevorzugt von 400-900 $m^2$/g, haben.

Die Bestimmung der BET Oberfläche erfolgt nach DIN ISO 9277 (1995) in einem Sorptionsmessgerät NOVA e2000 der Firma QUANTACHROME.

Die als Pigment eingesetzten Carbonaerogele können ein Mesoporenvolumen von 0,005 - 5 $cm^3$/g, vorzugsweise von 0,05 - 3 $cm^3$/g, besonders bevorzugt von 0,2-2 $cm^3$/g, haben.

Die als Pigment eingesetzten Carbonaerogele können einen mittleren Mesoporendurchmesser von 1,8 - 50 nm, vorzugsweise von 5-45 nm, besonders bevorzugt von 10 - 35 nm, haben.

Die Bestimmung des Mesoporenvolumens und der Porenradienverteilung erfolgt gemäß DIN 66134 (1998) nach der BJH-Methode aus den Desorptionsdaten der aufgenommenen Isothermen im relativen Druckbereich p/p$_0$ von 0,99 bis 0,34.

Ferner können die als Pigment eingesetzten Carbonaerogele ein Mikroporenvolumen von 0,01- 1,0 $cm^3$/g, vorzugsweise von 0,05 - 0,5 $cm^3$/g, besonders bevorzugt von 0,1 - 0,35 $cm^3$/g, haben.

Die Bestimmung des Mikroporenvolumens erfolgt nach DIN 66135-1, 66135-2, 66135-3 (2001) nach dem t-plot-Verfahren. Die Auswertung des t-plots erfolgt dabei nach der Gleichung von de Boer.

Die als Pigment eingesetzten Carbonaerogele können eine mittlere Partikelgröße von kleiner 1 μm, vorzugsweise zwischen 0,05 und 1 μm, besonders bevorzugt zwischen 0,1 und 1 μm, ganz besonders bevorzugt zwischen 0,5 und 0,95 pm, haben.

Das Pigment kann eine Mischung aus Pigmenten sein.

Die Verbindung der allgemeinen Formel I kann vorzugsweise $CH_3$-$(CH_2)_n$-$CH_2$-O-$[(CH_2)_2$-O$]_m$-H, mit n=10, 12, 14, 16 oder 18 und m=35-100, sein.

Beispielsweise können Verbindungen der allgemeinen Formel I $CH_3$-$(CH_2)_{10}$-$CH_2$-O-$[(CH_2)_2$-O$]_{35}$-H, $CH_3$-$(CH_2)_{12}$-$CH_2$-O-$[(CH_2)_2$-O$]_{35}$-H, $CH_3$-$(CH_2)_{14}$-$(CH_2$-O-$[(CH_2)_2$-O$]_{35}$-H, $CH_3$-$(CH_2)_{16}$-$CH_2$-O-$[(CH_2)_2$-O$]_{35}$-H, $CH_3$-$(CH_2)_{18}$-$CH_2$-O-$[(CH_2)_2$-O$]_{35}$-H, $CH_3$-$(CH_2)_{10}$-$CH_2$-O-$[(CH_2)_2$-O$]_{60}$-H, $CH_3$-$(CH_2)_{12}$-$CH_2$-O-$[(CH_2)_2$-O$]_{60}$-H, $CH_3$-$(CH_2)_{14}$-$CH_2$-O-$[(CH)_2$-O$]_{60}$-H, $CH_3$-$(CH_2)_{16}$-$CH_2$-O-$[(CH_2)_2$-O$]_{60}$-H, $CH_3$-$(CH_2)_{18}$-$CH_2$-O-$[(CH_2)_2$-O$]_{60}$-H, $CH_3$-$(CH_2)_{10}$-$CH_2$-O-$[(CH_2)_2$-O$]_{90}$-H, $CH_3$-$(CH_2)_{12}$-$CH_2$-O-$[(CH_2)_2$-O$]_{90}$-H, $CH_3$-$(CH_2)_{14}$-$CH_2$-O-$[(CH_2)_2$-O$]_{90}$-H, $CH_3$-$(CH_2)_{16}$-$CH_2$-O-$[(CH_2)_2$-O$]_{90}$-H oder $CH_3$-$(CH_2)_{18}$-$CH_2$-O-$[(CH_2)_2$-O$]_{90}$-H sein.

Das Pigmentgranulat kann ein Biozid, pH-Regulierungsmittel, Feuchthaltemittel, Haftungsmittel, Fließhilfsmittel oder Entschäumer enthalten.

Das Pigmentgranulat kann eine gefällte und/oder pyrogene Kieselsäure enthalten.

Das erfindungsgemäße Pigmentgranulat kann ein Dispergiermittel enthalten. Das Dispergiermittel kann ein nicht ionisches, ein kationisches, ein anionisches oder ein amphoteres Netzmittel sein. Das erfindungsgemäße Pigmentgranulat kann außer der Verbindung der allgemeinen Formel I dispergiermittelfrei sein.

Das Pigmentgranulat kann aus 40-65 Gew.-%, bevorzugt 43-63 Gew.-%, besonders bevorzugt 45-60 Gew.-%, ganz besonders bevorzugt 45-56 Gew.-%, bezogen auf das Pigmentgranulat, Pigment, mindestens 10 Gew.-%, bevorzugt mindestens 12 Gew.-%, besonders bevorzugt mindestens 15 Gew.-%, ganz besonders bevorzugt mindestens 20 Gew.-%, bezogen auf das Pigmentgranulat, einer Verbindung der allgemeinen Formel I

$$CH_3\text{-}(CH_2)n\text{-}CH_2\text{-}O\text{-}[(CH_2)_p\text{-}O]_m\text{-}H \qquad I,$$

mit n=8-18, vorzugsweise n=10-18, besonders bevorzugt n=12-17, ganz besonders bevorzugt n=14-16, p=1-4, vorzugsweise p=2, und m=35-100, vorzugsweise m=35-90, besonders bevorzugt m=40-80, ganz besonders bevorzugt m=45-70, gegebenenfalls einem pH-Regulierungsmittel, gegebenenfalls einem Feuchthaltemittel, gegebenenfalls ein Haftungsmittel, gegebenenfalls ein Entschäumer, gegebenenfalls ein Fließhilfsmittel und gegebenenfalls einem Biozid bestehen, ein Gewichtsverhältnis der Verbindung der allgemeinen Formel I zu Pigment von größer gleich der STSA Oberfläche des Pigmentes in m$^2$/g multipliziert mit 0,0021 g/m$^2$ haben und eine massengewichtete mittlere Korngröße des Pigmentgranulates <20 $\mu$m, vorzugsweise <15 $\mu$m, besonders bevorzugt <12 $\mu$m, ganz besonders bevorzugt <9 $\mu$m, haben.

Das Pigmentgranulat kann eine Restfeuchte von 0 bis 20 Gew.-%, vorzugsweise 0,1 bis 5 Gew.-%, haben, gemessen nach DIN ISO 787-2.

Das Pigmentgranulat kann 0 bis 5 Gew.-%, vorzugsweise 0,1 bis 3 Gew.-%, pH Regulierungsmittel enthalten.

Das Pigmentgranulat kann 0 bis 5 Gew.-%, vorzugsweise 0,1 bis 3 Gew.-%, Feuchthaltemittel enthalten.

Das Pigmentgranulat kann 0 bis 5 Gew.-%, vorzugsweise 0,1 bis 3 Gew.-%, Haftungsmittel enthalten.

Das Pigmentgranulat kann 0 bis 5 Gew.-%, vorzugsweise 0,1 bis 3 Gew.-%, Entschäumer enthalten.

Das Pigmentgranulat kann 0 bis 5 Gew.-%, vorzugsweise 0,1 bis 3 Gew.-%, Fließhilfsmittel enthalten.

Das Pigmentgranulat kann 0 bis 5 Gew.-%, vorzugsweise 0,1 bis 3 Gew.-%, Biozid enthalten.

In einer Ausführungsform der Erfindung kann das Pigmentgranulat aus 40-65 Gew.-%, bevorzugt 43-63 Gew.-%, besonders bevorzugt 45-60 Gew.-%, ganz besonders bevorzugt 45-56 Gew.-%, bezogen auf das Pigmentgranulat, Pigment, ausgewählt aus der Gruppe Gasruß, Furnaceruß, Pigment Yellow 74, Pigment Blue 15:3 und Pigment Red 122, mindestens 10 Gew.-%, bevorzugt mindestens 12 Gew.-%, besonders bevorzugt mindestens 15 Gew.-%, ganz besonders bevorzugt mindestens 20 Gew.-%, bezogen auf das Pigmentgranulat, einer Verbindung der allgemeinen Formel I

$$CH_3\text{-}(CH_2)_n\text{-}CH_2\text{-}O\text{-}(CH_2)_p\text{-}O]_m\text{-}H \qquad I$$

mit n=8-18, vorzugsweise n=10-18, besonders bevorzugt n=12-17, ganz besonders bevorzugt n=14-16, p=1-4, vorzugsweise p=2, und m=35-100, vorzugsweise m=35-90, besonders bevorzugt m=40-80, ganz besonders bevorzugt m=45-70, gegebenenfalls einem pH-Regulierungsmittel, gegebenenfalls einem Feuchthaltemittel, gegebenenfalls ein Haftungsmittel, gegebenenfalls ein Entschäumer, gegebenenfalls einem Fließhilfsmittel und gegebenenfalls einem Biozid bestehen, ein Gewichtsverhältnis der Verbindung der allgemeinen Formel I zu Pigment von größer gleich der STSA Oberfläche des Pigmentes in m$^2$/g multipliziert mit 0,0021 g/m$^2$ haben und eine massengewichtete mittlere Korngröße des Pigmentgranulates <20 $\mu$m, vorzugsweise <15 $\mu$m, besonders bevorzugt <12 $\mu$m, ganz besonders bevorzugt <9 $\mu$m, haben.

Ein weiterer Gegenstand der Erfindung ist ein Verfahren zur Herstellung des erfindungsgemäßen Pigmentgranulats, welches dadurch gekennzeichnet ist, daß man 40-65 Gew.-%, bevorzugt 43-63 Gew.-%, besonders bevorzugt 45-60 Gew.-%, ganz besonders bevorzugt 45-56 Gew.-%, bezogen auf das Pigmentgranulat, Pigment und mindestens 10 Gew.-%, bevorzugt mindestens 12 Gew.-%, besonders bevorzugt mindestens 15 Gew.-%, ganz besonders bevorzugt mindestens 20 Gew.-%, bezogen auf das Pigmentgranulat, einer Verbindung der allgemeinen Formel I, mit einem Gewichtsverhältnis der Verbindung der allgemeinen Formel I zu Pigment größer gleich der STSA Oberfläche des Pigmentes in m$^2$/g multipliziert mit 0,0021 g/m$^2$, in einem Lösungsmittel dispergiert und anschließend die erhaltene Dispersion trocknet.

Als Lösungsmittel können Wasser, Glykol, Glycerin, Alkohole, Ketone oder Mischungen der vorgenannten Verbindungen eingesetzt werden.

Die Dispergierung kann mittels Perlmühlen, Planetenmühlen, Ultraschall, Rühr- und Mischorganen, Dissolvern, Schüttelmischern, beispielsweise Scandex, Rotor-Stator-Dispergieraggregaten, beispielsweise Ultra-Turrax, oder Hochdruckhomogenisatoren erfolgen.

Die Trocknung der Dispersion kann mittels Gefrier-, Infrarot-, Mikrowellen- oder Sprühtrocknung erfolgen.

Die Sprühtrocknung kann in einem Sprühtrockner mit Düsenzerstäubung im Gleichstrom, Halbgegenstrom (Fontainenzerstäubung) oder Gegenstromgasführung erfolgen.

Die Zerstäubung in den Sprühtrockner kann dabei mittels Ein- oder Mehrstoffdüsen erfolgen. Die Düsenöffnungen können von 0,01 bis 3 mm, vorzugsweise von 0,05 bis 2 mm, besonders bevorzugt von 0,1 bis 1,5 mm, sein. Als Zerstäubermedium können gasförmige Stoffe, beispielsweise Luft, Stickstoff, $CO_2$ und Argon, eingesetzt werden. Als Düsen können Vollkegel-, Hohlkegel-, Flachstrahl- und Glattstrahldüsen eingesetzt werden.

Das Einsprühen der erhaltenen Dispersion in den Sprühtrockner kann durch äußere Felder unterstützt werden. Die äußeren Felder können elektrische oder akustische Felder, beispielweise Ultraschall, sein.

Das Einsprühen der erhaltenen Dispersion in den Sprühtrockner kann über Rotationszerstäuber, Druckzerstäuber, Vibrationszerstäuber oder Venturidüsen erfolgen.

Die durch das Einsprühen in den Sprühtrockner erzeugte Tropfengröße kann von 50 nm bis 3 mm, bevorzugt von 100 nm bis 1 mm, besonders bevorzugt von 200 nm bis 0,5 mm, sein.

Die Sprühtrocknung kann bei einer Eintrittstemperatur von 80 - 500°C, vorzugsweise von 80 - 250°C, durchgeführt werden. Die Austrittstemperatur kann 10 - 150°C, vorzugsweise 15 - 90°C, betragen.

Die Sprühtrocknung kann bei einem Druckniveau nach der Düse von 0,03 bis 1,2 bar durchgeführt werden.

Die Sprühtrocknung kann bei einem Druckniveau in der Düse von 0,8 bis 8 bar durchgeführt werden.

Die Trocknung der Dispersion kann vorzugsweise durch Sprühtrocknung bei einer Eintrittstemperatur von 80 - 500°C, vorzugsweise 80 - 250°C, einem Druckniveau in der Düse von 0,8 bis 8 bar und einer Düsenöffnung von 0,01 bis 3 mm, vorzugsweise von 0,05 bis 2 mm, besonders bevorzugt von 0,1 bis 1,5 mm, durchgeführt werden.

Die erfindungsgemäßen Pigmentgranulate können eingesetzt werden zur Einfärbung und/oder Antistatischausrüstung in wasserbasierenden Farben- und Lacksystemen, Dispersionsfarben, Druckfarben, Tintensystemen und Beschichtungssystemen.

Ein weiterer Gegenstand der Erfindung ist ein Lack enthaltend mindestens ein erfindungsgemäßes Pigmentgranulat.

Die erfindungsgemäßen Pigmentgranulate weisen vorteilhafterweise eine sehr gute Dispergierbarkeit ("Stir in") in Wasser oder wasserbasierenden Lacksystemen bei gleichzeitig sehr guter Koloristik des Lacks auf und zeigen im vernetzten Lackfilm kein Aufschwimmen (Migration zur Oberfläche des Lackfilms) einer der Komponenten des Pigmentgranulates.

Beispiele

Beispiele 1-8:

Herstellung der Pigmentgranulate zu den Beispielen 1-8.

Die Zusammensetzungen der wäßrigen Pigmentdispersionen sind in der Tabelle 1 dargestellt.

Tabelle 1

Pigmentdispersionen

| Inhaltsstoffe [Gew.-%] | 1 | 2 | 3 | 4 | 5 | 6 | 7 | 8 |
|---|---|---|---|---|---|---|---|---|
| Beispiel | Vergleichsbeispiel | Vergleichsbeispiel | Vergleichsbeispiel | Vergleichsbeispiel | | | | |
| Farbruß S 160 | 14 | | | | | | | |
| Farbruß FW 171 | | 19,3 | 12 | 13 | 11,7 | 12 | 13 | 13 |
| Alkanol S 20 | 8 | | | | | | | |
| Alkanol S 60 | | | | 9,1 | 9,7 | 10 | 10,8 | 11,7 |
| Lutensol AO 30 | | 12,9 | 10,4 | | | | | |
| AMP 90 | 0,1 | 0,1 | 0,1 | 0,2 | 0,2 | 0,2 | 0,2 | 0,2 |
| 2-Di-Methyl-Amino-Ethanol | | 0,1 | 0,25 | | | | | |
| TEGO Antifoam XP 7001 | | 0,1 | | | | | | |
| Acticide MBS | 0,3 | 0,3 | 0,3 | | | | | |
| Isopropanol | | | | | 2,4 | | | |
| Wasser | 77.6 | 67,3 | 76,95 | 77,7 | 76 | 77,8 | 76 | 75,1 |

(fortgesetzt)

| Inhaltsstoffe [Gew.-%] | Pigmentdispersionen | | | | | | | |
|---|---|---|---|---|---|---|---|---|
| Beispiel | 1 | 2 | 3 | 4 | 5 | 6 | 7 | 8 |
| | Vergleichsbeispiel | Vergleichsbeispiel | Vergleichsbeispiel | Vergleichsbeispiel | | | | |
| Gesamt | 100 | 100 | 100 | 100 | 100 | 100 | 100 | 100 |

Alkanol S 20 ist eine Verbindung der allgemeinen Formel I mit p = 2, m = 20 und n = 16 der Firma Tego (Stoffgruppe: *Fettalkoholethoxylate).*

Alkanol S 60 ist eine Verbindung der allgemeinen Formel I mit p = 2, m = 60 und n = 16 der Firma Tego (Stoffgruppe: *Fettalkoholethoxylate) .*

Lutensol AO 30 ist eine Verbindung der allgemeinen Formel I mit p = 2, m = 30 und n = 11-13 der Firma BASF AG (Stoffgruppe: *Oxo-Alkoholethoxylate*).

Der Farbruß S 160 ist ein Gasruß mit einer mittleren STSA von 123 $m^2$/g der Firma Evonik Degussa GmbH.

Der Farbruß FW 171 ist ein Furnanceruß mit einer mittleren STSA von 380 $m^2$/g der Firma Evonik Degussa GmbH.

AMP 90 ist ein 2-Amino-2-Methyl-Propanol der Firma Angus Chemie.

2-Di-Methyl-Amino-Ethanol ist ein Amin der Firma Merck KGaA.

TEGO Antifoam XP 7001 ist ein Entschäumer der Firma Evonik Tego.

Acticide MBS ist ein Biozid der Firma Thor Chemie.

1. Vorbereitung der Netzmittellösungen für die Beispiele 1 bis 8 Die Verbindung der allgemeinen Formel I wird zunächst aufgeschmolzen und das einzusetzende Wasser auf ca. 45 °C erwärmt. Anschließend werden die beiden Komponenten wie im Mengenverhältnis laut Tabelle 1 mittels eines Dissolvers für 60 min vermischt. Anschließend wird der Netzmittellösung der in Tabelle 1 genannte pH Regulator, ggf. Entschäumer, Isopropanol und Biozid zugesetzt.

2. Einarbeiten / Vordispergierung der Pigmente in die vorbereiteten Netzmittellösungen Zur Herstellung der verschiedenen Pigmentdispersionen 1 bis 8 wird das entsprechende Pigment in die vorbereitete Netzmittellösung unter langsamen Rühren eingearbeitet.

3. Dispergierung Die in Punkt 2 vorbereiteten Pigmentdispersionen 1 bis 8 werden mit einer Ringspaltkugelmühle (RSKM) der Firma FrymaKoruma vom Typ CoBall-Mill MS12 mittels Zirkonoxidmahlkörpern (0,75 - 1,0 mm, Yttrium stabilisiert) dispergiert. Der Mahlkörperfüllgrad beträgt 60%, die Umfangsgeschwindigkeit 12 m/s. Es werden jeweils 9 Passagen gefahren. Die Pigmentdispersionen 1-8 ergeben nach dem Dispergieren dünnflüssige, homogene Dispersionen.

4. Sprühtrocknung Die Pigmentdispersionen 1 bis 8 werden anschliessend sprühgetrocknet (Büchi 190 Mini Spray Dryer, Düsenöffnung 0,5 mm, Druckniveau in der Düse 2 bar). Die Dispersion wird mittels Schlauchpumpe zur Sprühdüse befördert und bei einer Eintrittstemperatur von 200°C und einer Austrittstemperatur von 80°C getrocknet. Die Abscheidung erfolgt über einen Zyklon. Daraus resultieren die in der Tabelle 2 berechneten Zusammensetzungen der Pigmentgranulate. Bei der Berechnung wird davon ausgegangen, dass die Hilfsstoffe AMP 90, 2-Di-Methyl-Amino-Ethanol, Antifoam XP 7001, Acticide MBS und Isopropanol auf Grund des geringen Anteils und des niedrigen Siedepunktes nach der Sprühtrocknung nicht mehr zu berücksichtigen sind. Des weiteren wird die Restfeuchte des Pigmentgranulates gemessen und von 100% subtrahiert, sodaß der Rest sich auf das Pigment und die Verbindung der allgemeinen Formel I verteilt.

Tabelle 2

| Inhaltsstoffe [Gew.-%] | Vergleichsbeispiele | | | | Erfindungsgemäße Pigmentgranulate | | | |
|---|---|---|---|---|---|---|---|---|
| Beispiel | 1 | 2 | 3 | 4 | 5 | 6 | 7 | 8 |
| Farbruß S 160 | 62,6 | | | | | | | |
| Farbruß FW 171 | | 58,7 | 53,0 | 58,0 | 51,7 | 52,0 | 53,0 | 51,1 |
| Alkanol S 20 | 35,9 | | | | | | | |
| Alkanol S 60 | | | | 40,6 | 43,2 | 43,4 | 44,2 | 46,1 |
| Lutensol AO 30 | | 39,2 | 45,1 | | | | | |
| Restfeuchte | 1,5 | 2,1 | 1,9 | 1,4 | 5,1 | 4,6 | 2,8 | 2,8 |
| Gesamt | 100 | 100 | 100 | 100 | 100 | 100 | 100 | 100 |
| | | | | | | | | |
| massengewichtete mittlere Korngröße $d_{50}$, 3 [$\mu$m] | 7,61 | 8,01 | 7,88 | 6,75 | 7, 54 | 6,18 | 8,12 | 9,34 |
| Gewichtsverhältnis Verbindung der Formel I / Pigment | 0,57 | 0,67 | 0,85 | 0,70 | 0, 84 | 0,84 | 0,83 | 0,90 |

Lackversuche

Als Referenzlacke A-C zu den erfindungsgemäßen Lacken werden Lacke herangezogen die basierend auf den entsprechenden Farbrußen S160 und FW 171 durch konventionelle Dispergierung hergestellt werden.

a. Herstellung der Referenzlacke A-C

Die Reibgutzusammensetzung der Referenzlacke für die Farbruße S160 und FW 171 erfolgt nach folgenden Angaben:

| | |
|---|---|
| 1. Destilliertes Wasser | 48,4 g |
| 2. Tego Dispers 760W, 35%ig | 20,8 g |
| 3. Tego Foamex 830 | 0,3 g |
| 4. AMP 90 | 0,1 g |
| 5. Farbruß | 10,4 g |
| Gesamt | 80,0 g |
| Rußkonzentration | 13% |

Tego Dispers 760W, 35%ig ist ein Netz- und Dispergierhilfsmittel der Firma Tego.

Tego Foamex 830 ist ein Entschäumer der Firma Tego.

Die Positionen 1 bis 4 werden in einen Skandex-Dispergierbecher (180 ml, Durchmesser 5,3 cm, Höhe 12,5 cm) eingewogen und mit einem Spatel homogenisiert. Der bei 105 °C vorgetrocknete Pigmentruß wird zugewogen und mit einem Spatel so lange eingerührt, bis die gesamte Menge benetzt ist.

Die Vordispergierung des Reibgutes erfolgt für 5 Minuten mit einem Labordissolver (Pendraulik, LR 34) bei 4000 U/min mit einer Dispergierscheibe von 40 mm Durchmesser.

Nach der Vordispergierung erfolgt eine pH-Wert Kontrolle. Der pH-Wert wird durch Zugabe von AMP 90 auf einen Wert zwischen 8,5 und 9,0 eingestellt.

Dann werden zum Reibgut 540 g Chromanit-Stahlperlen, Durchmesser 3 mm, gegeben.

Die Mahlung des Farbrußes erfolgt mittels Laborschüttler (Skandex-Disperser BA-S 20). Die Dispgergierzeit beträgt 60 Minuten. Die Kühlung des Laborschüttlers wird dabei auf Stufe 2 eingestellt.

Nach dem Dispergiervorgang wird das Reibgut über ein VA-Stahlsieb abgesiebt und in einem 350 ml Kunststoffbecher gesammelt. Anschließend wird erneut eine pH-Wert Kontrolle durchgeführt und der pH Wert ggf. durch Zugabe von AMP 90 auf einen Wert zwischen 8,2 - 8,7 eingestellt.

Als Auflackbindemittel wird eine Polyurethandispersion der Firma Alberdingk & Boley, Alberdingk U710 (30%ig), eingesetzt.

Die Auflackung der so hergestellten Reibgüter erfolgt nach folgenden Angaben:
Auflackungen für die Referenzlacke A und B zu den Beispielen 1-3:

| 1. Reibgut | 5,6 g |
|---|---|
| 2. Alberdingk U710, 30%ig | 24,4 g |
| Gesamt | 30 g |
| Rußkonzentration, total | 2,4 % |

Auflackungen für den Referenzlack C zu den Beispielen 4-8:

| 1. Reibgut | 5,6 g |
|---|---|
| 2. Alberdingk U710, 30%ig | 42,9 g |
| Gesamt | 48,5 g |
| Rußkonzentration, total | 1,5 % |

Die Reibgut- und Bindemittelmengen werden in der angegebenen Reihenfolge in einen 180 ml Mischbecher eingewogen und anschließend kräftig mit dem Spatel für 10 Minuten homogenisiert. Nach einer Stunde erfolgt die Bestimmung des Grindometerwertes (Mahlfeinheit) mit einem Grindometerblock der Firma Erichsen nach DIN EN ISO 1524.

b. Herstellung der Lacke basierend auf den Pigmentgranulaten 1-8 (Tabelle 2)

In einem Skandex-Dispergierbecher (180 ml, Durchmesser 5,3 cm, Höhe 12,5 cm) wird VE-Wasser vorgelegt und jeweils eines der Granulate 1-8 mit Hilfe eines Spatels eingerührt. Anschließend erfolgt eine Dispergierung mittels Dissolver für 10 Minuten bei 3000 U/min mit einer Dissolverscheibe mit einem Durchmesser von 40 mm.

Das Verhältnis von VE-Wasser zu Granulat wird so gewählt, dass sich eine Konzentration von 15 Gew.-% Pigment ergibt. Die Pasten werden über Nacht stehen gelassen.

Die Auflackung der so hergestellten konzentrierten Pasten erfolgt mit dem Auflackbindemittel Alberdingk U710 (30%ig) der Firma Alberdingk & Boley.

Die Rußkonzentration der Auflackungen für die Lacke der Beispiele 1-3 beträgt 2,4%, die Rußkonzentration der Auflackungen für die Lacke der Beispiele 4-8 beträgt 1,5%.

Die Pasten- und Bindemittelmengen werden in 180 ml Mischbecher eingewogen und anschließend kräftig mit dem Spatel für 10 Minuten homogenisiert. Nach einer Stunde erfolgt die Bestimmung des Grindometerwertes (Mahlfeinheit) mit einem Grindometerblock der Firma Erichsen nach DIN EN ISO 1524.

c. Applikation der Referenzlacke A-C nach a und der Lacke nach b und Messung der Koloristik

Die fertigen Lacke werden auf Glasplatten (130 x 90 x 1 mm) mit einer Lackhantel mit einer Spalthöhe von 200 $\mu$m, nass, mit gleichmäßigem Zug und Druck aufgezogen. Dazu werden 2 ml des fertigen Lackes mittels Plastikpipette für den Aufstrich abgenommen und in einem Streifen von 5 cm Länge und ca. 1 cm Breite auf die Glasplatte aufgetragen. Es ist darauf zu achten, dass sich im Lackstreifen keine Luftblasen befinden. Die Lackhantel wird über dem Lackstreifen aufgesetzt und gleichmäßig über die Platte gezogen. Es wird ein Aufstrich erzeugt, der ungefähr 10 cm lang und 6 cm breit ist.

Nach dem Aufziehen wird der, auf der Glasplatte befindliche, nasse Lackfilm für 30 Minuten bei Raumtemperatur abgelüftet und anschließend die beschichtete Glasplatte für 30 Minuten bei 80 °C forciert getrocknet.

Die Messungen der Koloristik werden mit dem Messgerät Pausch Q-Color 35 und der Software WinQC+ durchgeführt. Alle Messungen erfolgen von hinten durch das beschichtete Glas.

Berechnungen der koloristischen Daten:
Farbtonunabhängige Schwarzzahl My und farbtonabhängige Schwarzzahl Mc:
Aus dem Normfarbwert Y der Messung (Lichtart D65/10) wird zunächst die farbtonunabhängige Schwarzzahl My (Gleichung 1) berechnet:

$$(1) \quad My = 100 \cdot \log\left(\frac{100}{Y}\right)$$

Anschließend wird die farbtonabhängige Schwarzzahl (Gleichung 2) berechnet:

$$(2) \quad Mc = 100 \cdot \left( \log\left(\frac{X_n}{X}\right) - \log\left(\frac{Z_n}{Z}\right) + \log\left(\frac{Y_n}{Y}\right) \right)$$

$X_n$ / $Z_n$ / $Y_n$ (DIN 6174) = Normfarbwerte des Koordinatenursprungs, bezogen auf die Lichtart und den Beobachter (DIN 5033 / Teil 7, Lichtart D65/10°)

$$X_n = 94,81 \quad Z_n = 107,34 \quad Y_n = 100,0$$

X / Y / Z = Normfarbwerte, die aus den Messungen der Probekörper berechnet werden.

Absoluter Farbtonbeitrag dM:

Aus den Schwarzzahlen Mc und My wird der Absolute Farbtonbeitrag dM (Gleichung 3) berechnet:

$$(3) \quad dM = Mc - My$$

In Tabelle 3 sind die Ergebnisse für die Lacktests der Pigmentgranulate 1-8 den entsprechenden Ergebnissen der Lacktests für die Referenzlacke gegenübergestellt. Je größer der Wert für die Farbtiefe $M_Y$, desto farbtiefer ("schwärzer") ist der entsprechende Lackfilm. Je größer der Wert für den Unterton dM desto stabiler ist die Pigmentverteilung im Lackfilm und desto blauer erscheint der schwarze Lackfilm. Für eine positive Beurteilung müssen die Werte für die Farbtiefe $M_Y$ und den Unterton dM der Lackfilme basierend auf den entsprechenden Pigmentgranulaten mindestens auf dem Niveau der Farbtiefewerte $M_Y$ und der Untertöne dM der entsprechenden Referenzlackfilme liegen. Desweiteren sollte die Mahlfeinheit einen Wert von kleiner 10μm aufweisen und eine optisch gute Oberfläche ohne Stippen und agglomerierte Pigmentteilchen vorliegen und die Verbindung der Formel I darf nach einer Lagerzeit von 48 h nicht zur Oberfläche des Lackfilms migrieren (aufschwimmen).

Tabelle 3

| Lack | Pigmentgranulat / Pigmentruß | $M_Y$ durch Glas | dM durch Glas | Mahlfeinheit [μm] | Qualität der Oberfläche, Ausschwimmen |
|---|---|---|---|---|---|
| Referenzlack A | Farbruß S160 | 267 | 8 | < 10 | in Ordnung |
| Referenzlack 1 | Beispiel 1 | 254 | -1 | Stippig | matt, stippig, Verbindung der Formel I schwimmt auf |
| | | | | | |
| Referenzlack B | Farbruß FW 171 | 319 | 10 | < 10 | in Ordnung |
| Referenzlack 2 | Beispiel 2 | 304 | 10 | > 50 | rauhe Oberfläche, sichtbare PB-Agglomerate |
| Referenzlack 3 | Beispiel 3 | 312 | 11 | <10 | Verbindung der Formel I schwimmt auf |
| | | | | | |
| Referenzlack C | Farbruß FW 171 | 303 | 10 | < 10 | in Ordnung |

(fortgesetzt)

| Lack | Pigmentgranulat / Pigmentruß | $M_Y$ durch Glas | dM durch Glas | Mahlfeinheit [$\mu$m] | Qualität der Oberfläche, Ausschwimmen |
|---|---|---|---|---|---|
| Referenzlack 4 | Beispiel 4 | 290 | 8 | 14 Stippen bis 20 | stippige Oberfläche, kein Aufschwimmen von Verbindung der Formel I |
| Erfindungsgemäßer Lack 5 | Beispiel 5 | 315 | 13 | < 10 | in Ordnung |
| Erfindungsgemäßer Lack 6 | Beispiel 6 | 313 | 12 | < 10 | in Ordnung |
| Erfindungsgemäßer Lack 7 | Beispiel 7 | 304 | 12 | < 10 | in Ordnung |
| Erfindungsgemäßer Lack 8 | Beispiel 8 | 321 | 13 | < 10 | in Ordnung |

Referenzlack 1 erreicht nicht die Koloristik des Referenzlackes A. Farbtiefe $M_Y$ und blauer Unterton dM werden nicht erreicht. Die Oberfläche ist nicht in Ordnung und die Verbindung der Formel I mit m=20 schwimmt auf.

Referenzlack 2 erreicht nicht die Koloristik des Referenzlackes B. Farbtiefe $M_Y$ wird nicht erreicht. Die Oberfläche ist rauh mit sichtbaren Pigmentagglomeraten. Das Verhältnis von Verbindung der Formel I zu Pigmentruß ist zu niedrig. Verbindung I mit m=30 schwimmt auf.

Referenzlack 3 erreicht nahezu die Koloristik des Referenzlackes B. Die Mahlfeinheit ist in Ordnung. Das Verhältnis von Verbindung der Formel I zu Pigmentruß ist in Ordnung. Allerdings schwimmt Verbindung der Formel I mit m=30 nach wie vor auf.

Referenzlack 4 enthaltend Verbindung der Formel I mit m=60 schwimmt nicht mehr auf. Allerdings ist das Verhältnis von Verbindung der Formel I zu Pigmentruß FW 171 zu klein. Die Oberfläche des Lackfilms ist stippig, die Mahlfeinheit ist nicht in Ordnung und die koloristischen Daten des Referenzlackes C werden nicht erreicht.

Die erfindungsgemäßen Lacke 5-8 übertreffen die koloristischen Daten des Referenzlackes C. Die Mahlfeinheiten sind <10$\mu$m und die Oberflächen der Lackfilme sind stippenfrei und in Ordnung. Die Verbindung der Formel I schwimmt nicht auf.

**Patentansprüche**

1. Pigmentgranulat, **dadurch gekennzeichnet, dass** dieses 40-65 Gew.-%, bezogen auf das Pigmentgranulat, Pigment und mindestens 10 Gew.-%, bezogen auf das Pigmentgranulat, einer Verbindung der allgemeinen Formel I

$$CH_3\text{-}(CH_2)_n\text{-}CH_2\text{-}O\text{-}[(CH_2)_p\text{-}O]_m\text{-}H \qquad I,$$

mit n=8-18, p=1-4 und m=35-100, enthält, das Gewichtsverhältnis der Verbindung der allgemeinen Formel I zu Pigment größer gleich der STSA Oberfläche des Pigmentes in m$^2$/g multipliziert mit 0,0021 g/m$^2$ ist und die massengewichtete mittlere Korngröße des Pigmentgranulates <20 $\mu$m beträgt, wobei die STSA Oberfläche nach ASTM D 6556 (2004) bestimmt wird und für Pigmentruße die Probe abweichend von der ASTM 6556 (2004) bei 105°C getrocknet wird

2. Pigmentgranulat gemäß Anspruch 1, **dadurch gekennzeichnet, dass** das Pigment ein Buntpigment, ein Carbonaerogel oder ein Ruß ist.

3. Pigmentgranulat gemäß Anspruch 1 oder 2,
**dadurch gekennzeichnet,**
**dass** die Verbindung der allgemeinen Formel I $CH_3\text{-}(CH_2)_{10}\text{-}CH_2\text{-}O\text{-}[(CH_2)_2\text{-}O]_{35}\text{-}H$, $CH_3\text{-}(CH_2)_{12}\text{-}CH_2\text{-}O\text{-}[(CH_2)2\text{-}O]_{35}\text{-}H$, $CH_3\text{-}(CH_2)_{14}\text{-}CH_2\text{-}O\text{-}[(CH_2)_2\text{-}O]_{35}\text{-}H$, $CH_3\text{-}(CH_2)_{16}\text{-}CH_2\text{-}O\text{-}[(CH_2)_2\text{-}O]_{35}\text{-}H$, $CH3_2\text{-}(CH_2)_{18}\text{-}CH_2\text{-}O\text{-}[(CH_2)_2\text{-}O]_{35}\text{-}H$, $CH_3\text{-}(CH_2)_{10}\text{-}CH_2\text{-}O\text{-}[(CH_2)_2\text{-}O]_{60}\text{-}H$, $CH_3\text{-}(CH_3)_{12}\text{-}CH_2\text{-}O\text{-}[(CH_2)_2\text{-}O]_{60}\text{-}H$, $CH_3\text{-}(CH_2)_{14}\text{-}CH_2\text{-}O\text{-}[(CH_2)_2\text{-}O]_{50}\text{-}H$, $CH_3\text{-}(CH_2)_{16}\text{-}CH_2\text{-}O\text{-}[(CH_2)_2\text{-}O]_{50}\text{-}H$, $CH_3\text{-}(CH_2)_{18}\text{-}CH_2\text{-}O\text{-}[(CH_2)_2\text{-}O]_{50}\text{-}H$,

$CH_3-(CH_2)_{10}-CH_2-O-[(CH_2)_2-O]_{90}-H$, $CH_3-(CH_2)_{12}-CH_2-O-[(CH_2)_2-O]_{90}-H$, $CH_3-(CH_2)_{14}-C-H_2-O-[(CH_2)_2-O]_{90}-H$, $CH_3-(CH_2)_{16}-CH_2-O-[(CH_2)_2-O]_{90}-H$ oder $CH_3-(CH_2)_{18}-CH_2-O-[(CH_2)_2-O]_{90}-H$ ist.

4. Pigmentgranulat gemäß Anspruch 1,
   **dadurch gekennzeichnet,**
   **dass** die Restfeuchte 0 bis 20 Gew.-% ist.

5. Verfahren zur Herstellung des Pigmentgranulats gemäß Anspruch 1 bis 4, **dadurch gekennzeichnet,**
   **dass** man 40-65 Gew.-%. bezogen auf das Pigmentgranulat, Pigment und mindestens 10 Gew.-%, bezogen auf das Pigmentgranulat, einer Verbindung der allgemeinen Formel I mit einem Gewichtsverhältnis der Verbindung der allgemeinen Formel I zu Pigment größer gleich der STSA Oberfläche des Pigmentes in $m^2/g$ multipliziert mit 0,0021 $g/m^2$ in einem Lösungsmittel dispergiert und anschließend die erhaltene Dispersion trocknet.

6. Verwendung der Pigmentgranulate gemäß den Ansprüchen 1 bis 4 zur Einfärbung und/oder Antistatischausrüstung in wasserbasierenden Farben- und Lacksystemen, Dispersionsfarben, Druckfarben, Tintensystemen und Beschichtungssystemen.

7. Lack, **dadurch gekennzeichnet, dass** dieser mindestens ein Pigmentgranulat gemäß Anspruch 1-4 enthält.

## Claims

1. Pigment granules **characterized in that** they comprise 40-65% by weight, based on the pigment granules, of pigment and at least 10% by weight, based on the pigment granules, of a compound of the general formula I

   $$CH_3-(CH_2)_n-CH_2-O-[(CH_2)_p-O]_m-H \qquad\qquad I,$$

   with n=8-18, p=1-4 and m=35-100; the weight ratio of the compound of the general formula I to pigment is greater than or equal to the STSA surface area of the pigment in $m^2/g$ multiplied by 0.0021 $g/m^2$; and the mass-weighted average particle size of the pigment granules is <20 $\mu m$, whereby the STSA surface area is determined according to ASTM D 6556 (2004) and for pigment blacks, in deviation from ASTM D 6556 (2004), the sample is dried at 105°C.

2. Pigment granules according to Claim 1, **characterized in that** the pigment is a chromatic pigment, a carbon aerogel or a carbon black.

3. Pigment granules according to Claim 1 or 2, **characterized in that** the compound of the general formula I is $CH_3-(CH_2)_{10}-CH_2-O-[(CH_2)_2-O]_{35}-H$, $CH_3-(CH_2)_{12}-CH_2-O-[(CH_2)_2-O]_{35}-H$, $CH_3-(CH_2)_{14}-CH_2-O-[(CH_2)_2-O]_{35}-H$, $CH_3-(CH_2)_{16}-CH_2-O-[(CH_2)_2-O]_{35}-H$, $CH_3-(CH_2)_{18}-CH_2-O-[(CH_2)_2-O]_{35}-H$, $CH_3-(CH_2)_{10}-CH_2-O-[(CH_2)_2-O]_{60}-H$, $CH_3-(CH_2)_{12}-CH_2-O-[(CH_2)_2-O]_{60}-H$, $CH_3-(CH_2)_{14}-CH_2-O-[(CH_2)_2-O]_{60}-H$, $CH_3-(CH_2)_{16}-CH_2-O-[(CH_2)_2-O]_{60}-H$, $CH_3-(CH_2)_{18}-CH_2-O-[(CH_2)_2-O]_{60}-H$, $CH_3-(CH_2)_{10}-CH_2-O-[(CH_2)_2-O]_{90}-H$, $CH_3-(CH_2)_{12}-CH_2-O-[(CH_2)_2-O]_{90}-H$, $CH_3-(CH_2)_{14}-CH_2-O-[(CH_2)_2-O]_{90}-H$, $CH_3-(CH_2)_{16}-CH_2-O-[(CH_2)_2-O]_{90}-H$ or $CH_3-(CH_2)_{18}-CH_2-O-[(CH_2)_2-O]_{90}-H$.

4. Pigment granules according to Claim 1, **characterized in that** the residual moisture content is 0% to 20% by weight.

5. Process for producing the pigment granules according to Claim 1 to 4, **characterized in that** 40-65% by weight, based on the pigment granules, of pigment and at least 10% by weight, based on the pigment granules, of a compound of the general formula I, with a weight ratio of the compound of the general formula I to pigment of greater than or equal to the STSA surface area of the pigment in $m^2/g$ multiplied by 0.0021 $g/m^2$, are dispersed in a solvent and subsequently the resulting dispersion is dried.

6. Use of the pigment granules according to Claims 1 to 4 for coloring and/or antistatic treatment in water-based paint and surface-coating systems, emulsion paints, printing inks, liquid-ink systems and coating systems.

7. Surface-coating material **characterized in that** it comprises at least pigment granules according to Claim 1-4.

**Revendications**

1. Granulés pigmentaires, **caractérisés en ce que** lesdits granulés pigmentaires contiennent 40 à 65 % en poids, par rapport aux granulés pigmentaires, d'un pigment et au moins 10 % en poids, par rapport aux granulés pigmentaires, d'un composé de la formule générale I

$$CH_3\text{-}(CH_2)_n\text{-}CH_2\text{-}O\text{-}(CH_2)_p\text{-}O]_m\text{-}H \qquad\qquad I,$$

où n = 8-18, p = 1-4 et m = 35-100, **en ce que** le rapport massique entre le composé de la formule générale I et le pigment est supérieur ou égal à la surface STSA du pigment exprimée en $m^2/g$ multiplié par 0,0021 $g/m^2$, et **en ce que** la granulométrie moyenne pondérée des granulées pigmentaires est < 20 $\mu m$, sachant que la surface STSA est déterminée selon la norme ASTM D 6556 (2004) et que, pour des pigments noirs, l'échantillon est séché à une température de 105 °C à la différence de la norme ASTM 6556 (2004).

2. Granulés pigmentaires selon la revendication 1, **caractérisés en ce que** le pigment est un pigment coloré, un aérogel en carbone ou un noir de carbone.

3. Granulés pigmentaires selon la revendication 1 ou 2, **caractérisés en ce que** le composé de la formule générale I est $CH_3\text{-}(CH_2)_{10}\text{-}CH_2\text{-}O\text{-}[(CH_2)_2\text{-}O]_{35}\text{-}H$, $CH_3\text{-}(CH_2)_{12}\text{-}CH_2\text{-}O\text{-}[(CH_2)_2\text{-}O]_{35}\text{-}H$, $CH_3\text{-}(CH_2)_{14}\text{-}CH_2\text{-}O\text{-}[(CH_2)_2\text{-}O]_{35}\text{-}H$, $CH_3\text{-}(CH_2)_{16}\text{-}CH_2\text{-}O\text{-}[(CH_2)_2\text{-}O]_{35}\text{-}H$, $CH_3\text{-}(CH_2)_{18}\text{-}CH_2\text{-}O\text{-}[(CH_2)_2\text{-}O]_{35}\text{-}H$, $CH_3\text{-}(CH_2)_{10}\text{-}CH_2\text{-}O\text{-}[(CH_2)_2\text{-}O]_{60}\text{-}H$, $CH_3\text{-}(CH_2)_{12}\text{-}CH_2\text{-}O\text{-}[(CH_2)_2\text{-}O]_{60}\text{-}H$, $CH_3\text{-}(CH_2)_{14}\text{-}CH_2\text{-}O\text{-}[[(CH_2)_{2}\text{-}O]_{60}\text{-}H$, $CH_3\text{-}(CH_2)_{16}\text{-}CH_2\text{-}O\text{-}[(CH_2)_2\text{-}O]_{60}\text{-}H$, $CH_3\text{-}(CH_2)_{18}\text{-}CH_2\text{-}O\text{-}[[(CH_2)_2\text{-}O]_{60}\text{-}H$, $CH_3\text{-}(CH_2)_{10}\text{-}CH_2\text{-}0\text{-}[(CH_2)_2\text{-}O]_{90}\text{-}H$, $CH_3\text{-}(CH_2)_{12}\text{-}CH_2\text{-}O\text{-}[(CH_2)_2\text{-}O]_{90}\text{-}H$, $CH_3\text{-}(CH_2)_{14}\text{-}CH_2\text{-}O\text{-}[(CH_2)_2\text{-}O]_{90}\text{-}H$, $CH_3\text{-}(CH_2)_{16}\text{-}CH_2\text{-}O\text{-}[(CH_2)_2\text{-}O]_{90}\text{-}H$ ou $CH_3\text{-}(CH_2)_{18}\text{-}CH_2\text{-}O\text{-}[(CH_2)_2\text{-}O]_{90}\text{-}H$.

4. Pigments granulaires selon la revendication 1, **caractérisés en ce que** l'humidité résiduelle est de 0 à 20 % en poids.

5. Procédé servant à fabriquer des granulés pigmentaires selon la revendication 1 à 4, **caractérisé en ce qu'**on disperse 40 à 65 % en poids, par rapport aux granulés pigmentaires, d'un pigment et au moins 10 % en poids, par rapport aux granulés pigmentaires, d'un composé de la formule générale I selon un rapport massique entre le composé de la formule générale I et le pigment supérieur ou égal à la surface STSA du pigment exprimée en $m^2/g$ multiplié par 0,0021 $g/m^2$ dans un solvant, puis en ce qu'on sèche la dispersion obtenue.

6. Utilisation des granulés pigmentaires selon les revendications 1 à 4 aux fins de la coloration et/ou pour le traitement antistatique dans des systèmes de peinture et de vernis à base d'eau, dans des couleurs de dispersion, dans des couleurs d'impression, dans des systèmes d'encre et dans des systèmes de revêtement.

7. Vernis, **caractérisé en ce que** ledit vernis contient au moins des granulés pigmentaires selon les revendications 1 à 4.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2540355
- US 3133893 A
- EP 0036520 A
- EP 0282855 A
- EP 1103173 A
- EP 857764 A
- EP 1090081 A
- US 6063182 A
- DE 19731572

- US 5837044 A
- WO 2003055959 A
- US 2005090609 A
- DE 102007026551
- WO 9845361 A
- DE 19613796
- DE 19521565
- WO 9842778 A